(19) Europäisches Patentamt

European Patent Office

Office européen des brevets

(11) Publication number: **0 262 232 B1**

(12) # EUROPEAN PATENT SPECIFICATION

(45) Date of publication of patent specification: **25.08.93** (51) Int. Cl.⁵: **C08L 53/02**

(21) Application number: **87902712.6**

(22) Date of filing: **09.04.87**

(86) International application number:
**PCT/JP87/00221**

(87) International publication number:
**WO 87/06250 (22.10.87 87/23)**

(54) **RUBBER COMPOSITION.**

(30) Priority: **10.04.86 JP 82488/86**

(43) Date of publication of application:
**06.04.88 Bulletin 88/14**

(45) Publication of the grant of the patent:
**25.08.93 Bulletin 93/34**

(84) Designated Contracting States:
**DE FR GB**

(56) References cited:
**EP-A- 0 054 440**
**JP-A-57 109 817**
**JP-A-57 109 818**
**US-A- 4 482 678**

(73) Proprietor: **SUMITOMO CHEMICAL COMPANY, LIMITED**
**Kitahama 4-chome 5-33**
**Chuo-ku Osaka 541(JP)**

Proprietor: **SUMITOMO RUBBER INDUSTRIES LIMITED**
**No. 1-1, Tsutsui-cho 1-chome**

**Chuo-ku Kobe-shi Hyogo 651(JP)**

(72) Inventor: **TAKAO, Hiroyoshi**
**7-16, Kurosunadai 3-chome**
**Chiba-shi Chiba 281(JP)**
Inventor: **YOSHIDA, Nobuyuki**
**19-4, Aobadai 4-chome**
**Ichihara-shi Chiba 299-01(JP)**
Inventor: **IMAI, Akio**
**17-10, Aobadai 3-chome**
**Ichihara-shi Chiba 299-01(JP)**
Inventor: **TSUJI, Mitsuji**
**9, Yushudainishi 1-chome**
**Ichihara-shi Chiba 299-01(JP)**
Inventor: **SAITO, Yuichi**
**4-5-404, Honjo-cho 1-chome**
**Higashinada-ku, Kobe-shi Hyogo 658(JP)**

(74) Representative: **Türk, Gille, Hrabal, Leifert**
**Brucknerstrasse 20**
**D-40593 Düsseldorf (DE)**

**Description**

TECHNICAL FIELD

The present invention relates to a rubber composition suitable for use in treads of automobile tires, and more particularly to a rubber composition for use in treads of tires of low fuel cost having excellent wet skid characteristic, excellent rolling resistance characteristic and excellent skid characteristic on ice-snow road.

BACKGROUND ART

In recent years, the reduction of running fuel cost of automobiles has been in strong demand increasingly, particularly it is of urgent demand to improve characteristics of tires, because it has an important influence on fuel saving.

The characteristics required for tires are principally wear resistance, wet skid characteristic, low heat generation, bending resistance, chipping resistance and groove cracking resistance, and they must be well balanced. Especially, from the viewpoint of resources and energy saving, it is important that energy loss and rolling resistance are low.

Among these characteristics, a high wet skid characteristic for steering stability and a low rolling resistance for fuel saving are particularly important, but the both characteristics have been recognized as contrary to each other from the conventional knowledge.

The present inventors, while continuing the fundamental study of the rolling and wet skid characteristics which have been hitherto considered as antinomic, made a study of the structure and polymerization process of polymers having an excellent processability practically required in tire manufacturing such as kneading processability, roll processability and extrusion processability, and they found, as described in U.S. Patent 4,523,618, that a branched polymer having a particular structure has a high wet skid characteristic and an excellent rolling resistance together with an excellent processability.

Also, rubber compositions suitable for use in the treads of low fuel cost tires are likewise proposed by the present inventors (e.g. Japanese Unexamined Patent Publication No. 4633/1984 and No. 4634/1984 and U.S. Patent 4,482,678). These compositions contain as a main rubber component a copolymer of a vinyl aromatic compound and butadiene having a particular structure and a particular molecular weight distribution or a mixture, and they have both a high wet skid characteristic and an excellent rolling resistance characteristic and further excellent processability and excellent practical moldability required in molding of tires.

Also, in recent years, since the public nuisance of dust particles due to the spike tires in a cold district is high-lighted and since exchanging summer tires with snow or spike tires is awkward, tires available throughout the year without exchanging is strongly demanded.

A tread rubber used in these tires requires an excellent skid characteristic on ice and snow roads (ice skid characteristic) in addition to a high wet skid characteristic and a low rolling resistance. In order to improve the skid characteristic on ice-snow road, it is known hitherto that a rubber hardness at a low temperature must be reduced, but it is difficult to satisfy these characteristics at the same time.

For instance, in a rubber composition mainly composed of an emulsion-polymerized SBR, a good wet skid characteristic may be obtained, but an energy loss is high and a rolling resistance characteristic is poor, besides an ice skid characteristic is also not sufficient.

Also, a rubber composition using rubber components having a low glass transition temperature (Tg) such as natural rubber, polyisoprene rubber, high-cis-1,4-polybutadiene rubber and the like, has superior rolling resistance characteristic and ice skid characteristic, but is poor in wet skid characteristic.

Further, though the compositions of the aforemetioned U.S. Patent 4,523,618, Japanese Unexamined Patent Publication Nos. 4633/1984 and 4634/1984 and USP 4,482,678 have a high wet skid characteristic together with an excellent rolling resistance characteristic, the rubber hardness increases rapidly at a low temperature due to its relatively high Tg, thus the ice skid characteristic is far from the satisfied level.

Various rubber compositions are also proposed by other persons. For instance, in Japanese Unexamined Patent Publication Nos. 108142/1982 and 200439/1982, there are disclosed a rubber composition containing a rubber which is a styrene-butadiene copolymer prepared using an organolithium initiator and having two blocks with different bound styrene contents and vinyl contents in butadiene component. These are excellent in a balance between wet skid characteristic and rolling resistance characteristic, but the ice skid characteristic is not in a satisfactory level.

Also, in Japanese Unexamined Patent Publication No. 192739/1985, a rubber composition containing a branched styrene-butadiene block copolymer having two different blocks is disclosed. A relatively good ice skid characteristic is achieved, but a level required in practical use is still not satisfied.

Also, though it has been attempted to blend different kinds of polymers together so as to possibly harmonize the aforementioned characteristics which are conflicting with each other, it is the present situation that the demanded performance is not still satisfied and further improvements are strongly demanded in the industry, setting aside some improvements being made to a certain extent.

In view of the present situation, the present invention is intended to improve drawbacks of conventional rubber compositions for use in the tread, in which a satisfactory level is not achieved in an ice skid characteristic. That is to say, it is an object of the present invention to provide a rubber composition suitable for use in the tread of low fuel cost tires, in which wet skid characteristic, rolling resistance characteristic and ice skid characteristic are totally improved.

The present inventors have earnestly studied in order to further improve wet skid characteristic, rolling resistance characteristic and ice skid characteristic with respect to a copolymer of an aromatic vinyl compound and a conjugated diene compound prepared by using an organolithium initiator in a hydrocarbon solvent. As a result, they have found that the wet skid characteristic, rolling resistance characteristic and ice skid characteristic can be improved totally when there is used a rubber composition using as a main rubber component a block copolymer consisting of two blocks having an aromatic vinyl compound content and a 1,2- or 3,4-bonding content in a conjugated diene portion which are limited within specific ranges, or its branched polymer.

## DISCLOSURE OF THE INVENTION

That is to say, the present invention relates to a rubber composition comprising a rubber component containing at least 20 % by weight of a block copolymer which comprises a block (A) and a block (B), obtained by copolymerization of a aromatic vinyl compound and a conjugated diene compound in a hydrocarbon solvent in the presence of an organolithium initiator, and in which:

a) the block (A) is a copolymer block having a content of aromatic vinyl compound of 13 to 30 % by weight and a content of 1,2- or 3,4-bonding in the conjugated diene component of 10 to 16 % by weight;

b) the block (B) is a copolymer block having a content of aromatic vinyl compound of not less than 10 % by weight and a content of 1,2- or 3,4-bonding in the conjugated diene component of 40 to 57 % by weight;

c) the content of the block (A) in the block copolymer is from 20 to 80 % by weight;

d) the content of the aromatic vinyl compound in the block copolymer as a whole is from 10 to 30 % by weight and the content of 1,2- or 3,4-bonding in the conjugated diene component of the block copolymer as a whole is from 20 to 50 % by weight;

e) not less than 40 % by weight of polymer chains are modified with a trifunctional or tetrafunctional coupling agent; and

f) the difference between the content of the aromatic vinyl compound of said block (A) and the content of the aromatic vinyl compound of said block (B) is less than 5 % by weight.

## BEST MODE FOR PRACTICING THE INVENTION

The rubber composition of the present invention, as compared with the rubber compositions disclosed in Japanese Unexamined Patent Publication Nos. 108142/1982, 200439/1982 and 192739/1985, is different in limited conditions in the blocks of block copolymer and is superior in a total balance between rolling resistance characteristic, ice skid characteristic and wet skid characteristic.

The excellent characteristics in the present invention are realized by the fact that the content of conjugated diene units having 1,2- or 3,4-bonding in the conjugated diene component (hereinafter referred to as "1,2- or 3,4-bonding content") in the block A of the block copolymer is relatively low, and both the blocks A and B have an aromatic vinyl compound content of not less than 10 % by weight.

In the block copolymer of the present invention, it is important that (A) in the block A the aromatic vinyl compound content is from 13 to 30 % by weight and the 1,2- or 3,4-bonding content in the conjugated diene component is from 10 to 16 % by weight, and (B) in the block B the aromatic vinyl compound content is not less than 10 % by weight and the 1,2- or 3,4-bonding content in the conjugated diene component is from 40 to 57 % by weight.

In the block A, it is difficult industrially to bring the 1,2- or 3,4-bonding content in the conjugated diene component below 10 % by weight, and if it is more than 25 % by weight, the difference from the 1,2- or 3,4-bonding content in the conjugated diene component of the block B is decreased to deteriorate the ice skid characteristic.

3

Similarly, when the 1,2- or 3,4-bonding content in the conjugated diene component of the block B is less than 40 % by weight, the ice skid characteristic is poor. Also, when the 1,2- or 3,4-bonding content in the block B is increased above 75 % by weight, it is not preferable from the viewpoint of the rolling resistance.

In the block copolymer of the present invention, if the aromatic vinyl compound content of either the block A or the block B is below 10 % by weight, it is not preferable from the viewpoint of balance between the wet skid characteristic and ice skid characteristic. Further, the difference in the aromatic vinyl compound content between the block A and block B, is smaller the better from the viewpoint of the ice skid characteristic and the difference is less than 5 % by weight. It is preferable that the content of the aromatic vinyl compound in the block B is at most 60 % by weight.

In the block copolymer of the present invention, (C) the content of block A is in the range of 20 to 80 % by weight, and preferably from 40 to 60 % by weight. Characteristics intended by the present invention are not obtainable outside this range.

In the block copolymer of the present invention, (D) the aromtic vinyl compound content of the block copolymer as a whole is from 10 to 30 % by weight. If the aromatic vinyl compound content is less than 10 % by weight, the wet skid characteristic is poor, and if it exceeds 30 % by weight, the rolling resistance and ice skid characteristics are poor, which is inadequate from the objects of the present invention.

Also, the 1,2- or 3,4-bonding content in the conjugated diene component of the copolymer as a whole is from 20 to 50 % by weight. Deviation from this range deteriorates the balance between the wet skid characteristic and rolling resistance characteristic, which is not preferable.

As a process for preparing the block copolymer of the present invention, for instance, there is mentioned a process using an organic alkali metal compound as an initiator known as a living anionic polymerization. Particularly, a process using an inert hydrocarbon compound as a polymerization solvent and using an organolithium compound as a polymerization initiator, and Lewis basic compounds such as ethers or tertiary amines as an agent for controlling the microstructure, namely 1,2- or 3,4-bonding content in the conjugated diene portion, is desirable from the viewpoint of polymerization stability and controllability.

The block copolymer of the present invention is obtained by, after first polymerization for the block A or B, changing the polymerization temperature or adjusting the amount of the microstructure control agent and then conducting a polymerization for the other block.

Examples of the aromatic vinyl compound employed for obtaining the block copolymer in the present invention are styrene, styrene derivatives having a substituent on the benzene nucleus, e.g. m-methylstyrene, p-methylstyrene and p-tertiary butylstyrene, and styrene derivatives having a substituent on the vinyl group, e.g. $\alpha$-methylstyrene. From the viewpoint of obtainability in the practice on an industrial scale, styrene and p-methylstyrne are preferably selected, and more preferably, styrene is selected.

Examples of the conjugated diene compound are 1,3-butadiene, isoprene, piperylene and substituted butadienes such as 2,3-dimethyl-1,3-butadiene and 1-phenyl-1,3-butadiene, 1,3-pentadiene and its substituted derivatives, and mixtures thereof. Particularly, 1,3-butadiene or isoprene is preferably employed, because of easiness in obtaining the monomer and high polymerization rate in the production on an industrial scale.

In the preparation of the block copolymer of the present invention, aromatic hydrocarbons such as benzene, toluene, xylene and ethylbenzene, aliphatic hydrocarbons such as hexane and heptane, and alicyclic hydrocarbons such as cyclopentane, cyclohexane and methylcyclohexane are preferably employed as an inert polymerization solvent or diluent from the viewpoint of control of the polymerization reaction.

These hydrocarbons may be employed alone or in admixture thereof. They are preferably used in an amount of 100 to 2000 parts by weight per 100 parts by weight of the whole monomers used. With regards to these solvents and the above-mentioned monomers, it is necessary to previously, sufficiently remove therefrom substances which destroy the initiator or the active ends, e.g. water, oxygen, carbon dioxide, certain kinds of sulfur compounds, and acetylene compounds.

Preferable organolithium compounds used for preparing the block copolymer in the present invention are those known usually as anionic polymerization initiators of one end initiation type or both ends initiation type. Representative examples are ethyllithium, propyllithium, butyllithium, amyllithium, trimethylenedilithium, tetramethylenedilithium, hexyllithium, cyclohexyllithium, phenyllithium, tolyllithium, naphthyllithium, compounds such as lithium complexes of condensed or noncondensed aromatic rings, and oligobutadienyldilithium and oligoisobutyleneyldilithium which are in the living state.

These organolithium compounds may be employed alone or in admixture thereof.

As Lewis basic compounds used for the preparation of the block copolymer of the present invention, various kinds of compounds can be employed, but ether compounds and tertiary amines are preferable because of being easily obtainable in practicing on an industrial scale. Examples of the ether compounds are cyclic ethers such as tetrahydrofuran, tetrahydropyran and 1,4-dioxane; aliphatic monoethers such as diethyl ether and dibutyl ether; aliphalic polyethers such as ethyleneglycoldimethyl ether, ethyleneglycoldiethyl ether, ethyleneglycoldibutyl ether, diethyleneglycoldiethyl ether and diethyleneglycoldibutyl ether; aromatic ethers such as diphenyl ether and anisole.

Examples of the tertiay amine compounds are triethylamine, tripropylamine, tributylamine, and other compounds such as N,N,N',N'-tetramethylethylenediamine, N,N-diethylaniline, pyridine, and quinoline.

The 1,2- and/or 3,4-bonding content in the conjugated diene portion of the block copolymer can be controlled by adjusting the ratio of the Lewis basic compound and the polymerization initiator, and the polymerization temperature. The content is increased with increasing the proportion of the Lewis basic compound and with lowering the polymerization temperature.

The polymerization temperature is preferably from 0° to 150°C from the viewpoint of the economy and side reaction, though it can be changed according to the microstructure desired.

Also, in the present invention, in order to obtain a rubber composition having a high processability, the block copolymer may be branched. The proportion of the polymer chains modified with a trifunctional or tetrafunctional coupling agent in the whole polymer chains in said block copolymer can be controlled at not less than 40 % by weight, preferably within the range between 45 % by weight and less than 75 % by weight. In this case, the polymer chains modified by the trifunctional or tetrafunctional coupling agent mean polymer chains having such shape as the polymer chains coupled by chemical bonding in three or four directions from atom or atomic group in the polymer chain are present.

Here the content of the polymer chains modified by the coupling agent can be controlled with the amount ratio between the living polymerization ends and the coupling agent. Also, the content can be obtained from a molecular weight distribution measured by a gel permeation chromatograph (GPC). That is to say, the weight ratio of the modified polymer chains and the unmodified polymer chains can be defined by the relative ratio of the heights of peaks corresponding to the respective average molecular weights of the modified and unmodified polymer chains.

By controlling the range of polymer chains modified with the coupling agent as above, a good sheet condition upon roll or calender processing and a good tackiness in laminating sheets is obtained.

Also, as a trifunctional or tetrafunctional coupling agent, either of one compound or admixture of two or more compounds selected from silicon tetrachloride, tin tetrachloride, gerymanium tetrachloride, methyltrichlorosilane, dimethyl adipate, diethyl adipate, di-n-butyl adipate, dimethyl maleate, di-n-butyl maleate and di-n-octyl maleate is preferably employed from the viewpoint of the controllability of the coupling reaction. Particularly, preferable coupling agents are silicon tetrachloride, tin tetrachloride and methyltrichlorosiliane.

Also, in order to obtain the preferable proportion of modified polymer chains, the molar ratio of the coupling agent used in the preparation of the block copolymer to the living polymer ends should be controlled, for instance, when using the tetrafunctional coupling agent, its amount should be made not less than 0.1 mole per mole of the living polymer ends.

It is preferable that the Mooney viscosity of the block copolymer of the present invention is from 20 to 150 at 100°C. When the viscosity is less than 20, the rolling resistance characteristic becomes bad and when more than 150, the processability is lowered.

The rubber component used in the rubber composition in accordance with the present invention must contain at least 20 % by weight of the aforementioned block copolymer.

It is not preferable to contain the block copolymer less than 20 % by weight in the rubber component, because the wet skid characteristic and the ice skid characteristic on an ice-snow road are deteriorated. Particularly, the preferable content is from 40 % to less than 90 % by weight.

Although polymers which may be blended as the rubber component with the block copolymer are preferably natural rubber, synthetic isoprene rubber and high cis-butadiene rubber, an emulsion SBR (e.g., an SBR having a styrene content of 23.57 % by weight and a 1,2-bonding content of 18.7 % by weight) can be also employed.

Though it is preferable that these polymers are used in an amount of less than 80 % by weight, a particularly preferable range is from 10 to less than 60 % by weight. It is not preferable to use beyond this range, because in case of natural rubber, synthetic polyisoprene rubber and high cis-butadiene rubber, the wet skid characteristic lowers, and in case of an emulsion SBR, the ice skid characteristic lowers. On the other hand, it is preferable to use these polymers in an amount of not less than 10 % by weight, because the tackiness is increased and the inconvenient phenomenon such as demold splitting can be avoided in molding the composition into tires.

The rubber composition in accordance with the present invention shows an excellent wet skid characteristic, an excellent ice skid characteristic on ice and snow roads and a low rolling resistance as a result of using the block copolymer as mentioned above. In order to exhibit these characteristics and also to maintain a breaking resistance as obtained in a conventional composition for tires, the composition of the present invention may be incorporated with, as process oil, an oil having a flow point of 0° to less than 30°C in an amount of not less than 5 parts by weight to less than 25 parts by weight per 100 parts by weight of the rubber component.

As such an oil, an oil having a high aromatic compound content, namely a so-called aromatic oil, is preferably used. It is not preferable to use an oil having a flow point above 30°C, because the ice skid characteristic lowers, and also the viscosity of the composition increases, thus resulting in poor operability in handling.

On the other hand, it is also not preferable to use an oil having a flow point of less than 0°C, because the wet skid characteristic lowers, and also the breaking strength and the maximum elongation at breaking of the cured composition lower.

The present invention is explained by means of Examples to clarify the invention, but it is to be understood that the present invention is not limited to the Example.

Synthesis of Polymers B and D - F (Examples) A, C and G - K (Comparative Examples)

The air in a 20 liter autoclave equipped with a stirrer and a jacket was replaced with nitrogen gas, and the autoclave was charged with 10 kg of purified, dried n-hexane (or cyclohexane) and prescribed amounts of styrene, butadiene (or isoprene) and tetrahydrofuran as a microstructure modifier.

Then, as a polymerization initiator, n-butyllithium dissolved in n-hexane was added. Hot water was circulated in the jacket of the autoclave to start the polymerization at the prescribed temperature and an A block of the block polymer shown in Table 1 was synthesized.

After attaining the polymerization conversion of not less than 99 %, further styrene, butadiene (or isoprene) and a microstructure modifier were fed in prescribed amounts and the polymerization was further continued at the prescribed temperature to produce a B block of the block copolymer shown in Table 1.

Polymer K (Comparative Example) was a random copolymer composed of only the A block. Also, with regard to polymers B to K, after the polymerization, a prescribed amount of coupling agent was added as shown in Table 1.

With respect to all polymers, finally, 1.0 part by weight of 2,6-ditertiary-butyl-p-cresol (Sumilizer-BHT made by Sumitomo Chemical Co., Ltd.) per 100 parts by weight of the polymer was added, the reaction mixture was poured into hot water and the solvent was distilled away. The precipitated polymer was dried under reduced pressure. The results of measurement of the properties of the polymer are shown in Table 1. The measurement was made under the following conditions.

(1) Styrene content and 1,2- or 3,4-bonding content in conjugated diene component

Employing an infrared spectrophotometer made by Japan Spectroscopic Co., Ltd, the contents were calculated from an intensity ratio of characteristic absorption.

(2) Branched polymer content

Gel permeation chromatogram (HLC-802UR made by Toyo Soda Co., Ltd.) was used and columns of $10^3$, $10^4$, $10^6$ and $10^7$ were selected as the distribution column, and a refractometer was used as a detector. Tetrahydrofuran (THF) was used as a developing solvent and the molecular weight distribution of the polymer was measured at 40°C. The weight ratio of branched and unbranched polymer chains were defined by the relative ratio of the heights of peaks corresponding to respective average molecular weights of the branched and unbranched polymers.

Examples 1 to 5 and Comparative Examples 1 to I 10

According to the prescription shown in Table 2 and Table 3, kneading was conducted in a BR type Banbury mixer and cured at 160°C.

The cured product was subjected to the evaluation of the wet skid resistance characteristic, rolling resistance and ice skid resistance characteristic on ice-snow road. The evaluation was carried out as follows and the evaluated results are shown in Table 3.

As is clear from Table 3, the Examples using the block copolymer in accordance with the present invention as a rubber component indicate that the rolling resistance, wed skid resistance and ice skid resistance characteristics are totally well balanced.

(1) Rolling Resistance Characteristic

Employing a dynamic solid viscoelastometer made by Orientic Co., Ltd., loss tangent (tan $\delta$) at 60°C was measured on a cured sheet at initial elongation of 0.6 %, amplitude of 0.1 % and frequency of 11 Hz.

Table 3 shows relative values on the basis of Comparative Example 1. The smaller the value, the better the rolling resistance characteristic.

(2) Wet Skid Characteristic

The wet skid characteristic was measured by employing a portable skid resistance tester made by Stanley Co., Ltd. with respect to a cured rubber sheet having a thickness of 6.5 mm.

An asphalt surface sprayed with water of 20°C was employed as a contact road surface.

Table 3 shows relative values on the basis of Comparative Example 1. The larger the value, the better the wet skid characteristic.

(3) Ice Skid Characteristic

The hardness was measured at -20°C with respect to a cured rubber specimen.

Table 3 shows relative values on the basis of Comparative Example 1. The smaller the value, the better the ice skid characteristic.

(4) Roll Processability

The temperature of 6 inch roll was adjusted to 50°C, and the roll spacing was adjusted to 0.7, 1.0, 1.5 or 2.0 mm. A polymer or a polymer mixture was wound round the roll, and its state was observed and estimated according to the following criteria.

| Grade | State of Polymer on Roll |
|---|---|
| 5 | Winding state is very good, sheet skin is smooth and sheet has a tackiness. |
| 4 | Winding state is good, but sheet edge breaking occurs or initial biting is somewhat slow. |
| 3 | Rubber sheet rolled on the roll is lacking in tackiness or "biting" into bank is somewhat bad. |
| 2 | Bagging and sheet breaking occur. |
| 1 | "Biting" into rolls in early stage is bad, and the polymer is not formed into a sheet and does not wind round the roll. |

(5) Tackiness

The measurement was made employing a pick-up type tack meter made by Kabushiki Kaisha Toyo Seiki Seisakusho under the conditions of 500 g in pressure adhesion, 10 seconds in pressure adhesion time and 10 mm/min in pulling off rate.

In Table 3, grade 5 represents Comparative Example 1 with the best viscosity, grade 1 represents Comparative Example 4 with the worst viscosity, and others are evaluated on the basis of Comparative Examples 1 and 4.

As described hereinabove, according to the present invention, it is possible to provide a rubber composition for use in the tread of tires having a low fuel cost, in which the wet skid characteristic, rolling resistance characteristic and ice skid characteristic are totally improved as compared with the prior art.

## Table 1

| | A | B | C | D |
|---|---|---|---|---|
| | Comparative Example | Example | Comparative Example | Example |
| **Polymerization Conditions** | | | | |
| Solvent (kg) | n-Hexane 10 | n-Hexane 10 | Cyclohexane 10 | Cyclohexane 10 |
| A Block | | | | |
| Butadiene (kg) | 0.86 | 0.84 | 0.96 | 0.80 |
| Styrene (kg) | 0.14 | 0.16 | 0.24 | 0.20 |
| Microstructure modifier (g) | THF [1] 4.3 | THF 2.1 | THF 5.0 | THF 6.5 |
| n-BuLi [2] (mmol) | 7.0 | 10.0 | 11.5 | 12.8 |
| B Block | | | | |
| Butadiene (kg) | 0.82 | 0.84 | 0.7 | 0.8 |
| Styrene (kg) | 0.18 | 0.16 | 0.1 | 0.2 |
| Microstructure modifier (g) | Diglyme [3] 2.5 | EGDEE [4] 3.4 | Diglyme 3.0 | EGDBE [5] 1.3 |
| Polymerization temp. (max.) | | | | |
| Synthesis of A block | 50°C | 70°C | 50°C | 80°C |
| Synthesis of B block | 55°C | 60°C | 60°C | 50°C |
| Kinds of coupling agent | – | SiCl$_4$ | SnCl$_4$ | SiCl$_4$ |
| Amount of coupling agent (mmol) | – | 1.3 | 2.6 | 2.6 |

– continued –

EP 0 262 232 B1

- continued -

| | E | F | G | H |
|---|---|---|---|---|
| | Example | Example | Comparative Example | Comparative Example |
| Polymerization Conditions | | | | |
| Solvent (kg) | n-Hexane 10 | Cyclohexane 10 | Cyclohexane 10 | n-Hexane 10 |
| A Block | | | | |
| Butadiene (kg) | 0.87 [7] | 0.84 | 0.7 | 1.0 |
| Styrene (kg) | 0.13 | 0.16 | 0.3 | 0 |
| Microstructure modifier (g) | THF 5.0 | THF 3.0 | THF 75.0 | THF 3.5 |
| n-BuLi[2] (mmol) | 10.5 | 10.0 | 17.5 | 9.5 |
| B Block | | | | |
| Butadiene (kg) | 0.87 [7] | 0.84 | 1.0 | 0.65 |
| Styrene (kg) | 0.13 | 0.16 | 0 | 0.35 |
| Microstructure modifier (g) | THF 54.0 | EGDBE 2.3 | — | Diglyme 1.5 |
| Polymerization temp. (max.) | | | | |
| Synthesis of A block | 75°C | 73°C | 35°C | 50°C |
| Synthesis of B block | 75°C | 58°C | 75°C | 50°C |
| Kinds of coupling agent | $SiCl_4$ | DMAP [6] | $SiCl_4$ | $SiCl_4$ |
| Amount of coupling agent (mmol) | 1.4 | 3.0 | 4.0 | 0.6 |

EP 0 262 232 B1

- continued -

| | I | J | K |
|---|---|---|---|
| | Comparative Example | Comparative Example | Comparative Example |
| Polymerization Conditions | | | |
| Solvent (kg) | Cyclohexane 10 | n-Hexane 10 | Cyclohexane 10 |
| A Block | | | |
| Butadiene (kg) | 1.0 | 0.95 | 1.5 |
| Styrene (kg) | 0 | 0.05 | 0.5 |
| Microstructure modifier (g) | THF 18.5 | THF 20.5 | THF 70.0 |
| n-BuLi[2] (mmol) | 11.8 | 9.5 | 10.0 |
| B Block | | | |
| Butadiene (kg) | 0.6 | 0.65 | |
| Styrene (kg) | 0.4 | 0.35 | |
| Microstructure modifier (g) | Diglyme 2.0 | Diglyme 3.2 | |
| Polymerization temp. (max.) | | | |
| Synthesis of A block | 50$^{\circ}$C | 50$^{\circ}$C | |
| Synthesis of B block | 45$^{\circ}$C | 50$^{\circ}$C | 50$^{\circ}$C |
| Kinds of coupling agent | $SnCl_4$ | $SiCl_4$ | $SnCl_4$ |
| Amount of coupling agent (mmol) | 2.8 | 1.2 | 1.4 |

EP 0 262 232 B1

- continued -

| | A | B | C | D |
|---|---|---|---|---|
| | Comparative Example | Example | Comparative Example | Example |
| Polymer Structure | | | | |
| Results of Analysis | | | | |
| A Block | | | | |
| Styrene cont. (%) | 14 | 16 | 20 | 20 |
| 1,2(3,4) cont. (%) | 20 | 15 | 20 | 15 |
| B Block | | | | |
| Styrene cont. (%) | 18 | 16 | 13 | 20 |
| 1,2(3,4) cont. (%) | 60 | 57 | 70 | 45 |
| A/B ratio | 50/50 | 50/50 | 60/40 | 50/50 |
| Whole copolymer | | | | |
| Styrene cont. (%) | 16 | 16 | 17 | 20 |
| 1,2(3,4) cont. (%) | 40 | 36 | 40 | 30 |
| Polymer cont. (%) | 0 | 51 | 60 | 75 |
| $ML_{1+4}$, 100°C | 71 | 74 | 69 | 68 |

EP 0 262 232 B1

|  | E | F | G | H |
|---|---|---|---|---|
|  | Example | Example | Comparative Example | Comparative Example |
| Polymer Structure |  |  |  |  |
| Results of Analysis |  |  |  |  |
| A Block |  |  |  |  |
| Styrene cont. (%) | 13 | 16 | 30 | 0 |
| 1,2(3,4) cont. (%) | (3,4) 13 | 16 | 60 | 20 |
| B Block |  |  |  |  |
| Styrene cont. (%) | 13 | 16 | 0 | 35 |
| 1,2(3,4) cont. (%) | (3,4) 42 | 55 | 50 | 50 |
| A/B ratio | 50/50 | 50/50 | 50/50 | 50/50 |
| Whole copolymer |  |  |  |  |
| Styrene cont. (%) | 13 | 16 | 15 | 18 |
| 1,2(3,4) cont. (%) | (3,4) 28 | 35 | 55 | 35 |
| Polymer cont. (%) | 52 | 58 | 80 | 20 |
| $ML_{1+4}$, 100°C | 70 | 75 | 68 | 70 |

EP 0 262 232 B1

- continued -

| | I | J | K |
|---|---|---|---|
| | Comparative Example | Comparative Example | Comparative Example |

Polymer Structure

  Results of Analysis

    A Block

| | | | |
|---|---|---|---|
| Styrene cont. (%) | 0 | 5 | |
| 1,2(3,4) cont. (%) | 40 | 40 | |

    B Block

| | | | |
|---|---|---|---|
| Styrene cont. (%) | 40 | 35 | |
| 1,2(3,4) cont. (%) | 40 | 60 | |
| A/B ratio | 50/50 | 50/50 | |

  Whole copolymer

| | | | |
|---|---|---|---|
| Styrene cont. (%) | 20 | 20 | 25 |
| 1,2(3,4) cont. (%) | 40 | 50 | 45 |
| Polymer cont. (%) | 51 | 40 | 55 |
| $ML_{1+4}$, 100°C | 58 | 69 | 72 |

(1) THF: tetrahydrofuran
(2) n-BuLi: n-butyllithium
(3) Diglyme: diethyleneglycol dimethyl ether
(4) EGDEE: ethyleneglycol diethyl ether
(5) EGDBE: ethyleneglycol dibutyl ether
(6) DMAP: dimethyl adipate
(7) Isoprene was used instead of butadiene

Table 2

| Polymer | 100 parts by wt. |
| Aromatic oil | 20 parts by wt. |
| Stearic acid | 2 parts by wt. |
| Sulfur | 1.6 parts by wt. |
| Carbon black | 60 parts by wt. |
| Zinc oxide | 5 parts by wt. |
| Curing accelerator (1) | 2 parts by wt. |

Note
(1) N-Cyclohexyl-2-benzothiazolylsulfenamide

13

Table 3

|  |  | Examples | | | | | Comparative Examples | | | | | | | | | |
|---|---|---|---|---|---|---|---|---|---|---|---|---|---|---|---|---|
|  |  | 1 | 2 | 3 | 4 | 5 | 1 | 2 | 3 | 4 | 5 | 6 | 7 | 8 | 9 | 10 |
| Polymer component (part by weight) | Polymer A | – | – | – | – | – | – | – | – | – | – | – | – | 100 | – | 80 |
|  | " B | 100 | – | – | – | 80 | – | – | – | – | – | – | – | – | – | – |
|  | " C | – | – | – | – | – | – | – | – | – | – | – | – | – | 100 | – |
|  | " D | – | 100 | – | – | – | – | – | – | – | – | – | – | – | – | – |
|  | " E | – | – | 100 | – | – | – | – | – | – | – | – | – | – | – | – |
|  | " F | – | – | – | 100 | – | – | – | – | – | – | – | – | – | – | – |
|  | " G | – | – | – | – | – | – | – | – | 100 | – | – | – | – | – | – |
|  | " H | – | – | – | – | – | – | – | – | – | 100 | – | – | – | – | – |
|  | " I | – | – | – | – | – | – | – | – | – | – | 100 | – | – | – | – |
|  | " J | – | – | – | – | – | – | – | – | – | – | – | 100 | – | – | – |
|  | " K | – | – | – | – | – | – | 100 | 80 | – | – | – | – | – | – | – |
| Emulsion poly-merizaed SBR (1) |  | – | – | – | – | – | 100 | – | – | – | – | – | – | – | – | – |
| Natural rubber (2) |  | – | – | – | – | 20 | – | – | 20 | – | – | – | – | – | – | 20 |

– continued –

EP 0 262 232 B1

- continued -

|  |  | Examples |  |  |  |  | Comparative Examples |  |  |  |  |  |  |  |  |  |
|---|---|---|---|---|---|---|---|---|---|---|---|---|---|---|---|---|---|
|  |  | 1 | 2 | 3 | 4 | 5 | 1 | 2 | 3 | 4 | 5 | 6 | 7 | 8 | 9 | 10 |
| Evaluated results | Rolling resistance index | 87 | 89 | 88 | 86 | 87 | 100 | 89 | 89 | 91 | 90 | 93 | 91 | 89 | 88 | 89 |
|  | Wet skid index | 102 | 104 | 104 | 102 | 101 | 100 | 105 | 104 | 103 | 102 | 103 | 104 | 103 | 103 | 102 |
|  | Ice skid index | 97 | 99 | 100 | 97 | 97 | 100 | 108 | 107 | 103 | 101 | 104 | 106 | 98 | 98 | 97 |
|  | Roll processability | 4 | 5 | 4 | 4 | 5 | 5 | 4 | 5 | 5 | 2 | 4 | 3 | 2 | 5 | 5 |
|  | Tackiness | 4 | 2 | 3 | 4 | 5 | 5 | 3 | 4 | 1 | 4 | 3 | 3 | 4 | 3 | 5 |

Note (1) Sumitomo SBR®#1500 made by Sumitomo Chemical Co., Ltd.

(2) RSS #3

## Claims

1. A rubber composition comprising a rubber component containing at least 20 % by weight of a block copolymer which comprises a block (A) and a block (B), obtained by copolymerization of an aromatic vinyl compound and a conjugated diene compound in a hydrocarbon solvent in the presence of an

EP 0 262 232 B1

organolithium initiator, and in which:

a) the block (A) is a copolymer block having a content of aromatic vinyl compound of 13 to 30 % by weight and a content of 1,2- or 3,4-bonding in the conjugated diene component of 10 to 16 % by weight;

b) the block (B) is a copolymer block having a content of aromatic vinyl compound of not less than 10 % by weight and a content of 1,2- or 3,4-bonding in the conjugated diene component of 40 to 57 % by weight;

c) the content of the block (A) in the block copolymer is from 20 to 80 % by weight;

d) the content of the aromatic vinyl compound in the block copolymer as a whole is from 10 to 30 % by weight and the content of 1,2- or 3,4-bonding in the conjugated diene component of the block copolymer as a whole is from 20 to 50 % by weight;

e) not less than 40 % by weight of polymer chains are modified with a trifunctional or tetrafunctional coupling agent; and

f) the difference between the content of the aromatic vinyl compound of said block (A) and the content of the aromatic vinyl compound of said block (B) is less than 5 % by weight.

2. The rubber composition of claim 1, wherein 45 to less than 75 % by weight of polymer chains of the block copolymer is modified with a trifunctional or tetrafunctional coupling agent, the coupling agent being at least one member selected from the group consisting of silicon tetrachloride, tin tetrachloride, germanium tetrachloride, methyltrichlorosilane, dimethyl adipate, diethyl adipate, di-n-butyl adipate, dimethyl maleate, di-n-butyl maleate and di-n-octyl maleate.

3. The rubber composition of claim 1 or 2, wherein said aromatic vinyl compound is styrene and said conjugated diene compound is 1,3-butadiene.

4. The rubber composition of any of claims 1 to 3, wherein the Mooney viscosity at 100°C of said block copolymer is from 2o to 150.

**Patentansprüche**

1. Kautschukzusammensetzung, die umfaßt eine Kautschukkomponente, enthaltend mindestens 20 Gew.-% eines Block-Copolymers, das umfaßt einen Block (A) und einen Block (B), die erhalten wurden durch Copolymerisation einer aromatischen Vinylverbindung und einer konjugierten Dienverbindung in einem Kohlenwasserstoff-Lösungsmittel in Gegenwart eines Organolithium-Initiators, wobei:

a) der Block (A) ein Copolymer-Block mit einem Gehalt an einer aromatischen Vinylverbindung von 13 bis 30 Gew.-% und mit einem Gehalt an 1,2- oder 3,4-Bindungen in der konjugierten Dien-Komponente von 10 bis 16 Gew.-% ist;

b) der Block (B) ein Copolymer-Block mit einem Gehalt an einer aromatischen Vinylverbindung von nicht weniger als 10 Gew.-% und mit einem Gehalt an 1,2- oder 3,4-Bindungen in der konjugierten Dien-Komponente von 40 bis 57 Gew.-% ist;

c) der Gehalt an dem Block (A) in dem Block-Copolymer 20 bis 80 Gew.-% beträgt;

d) der Gehalt an der aromatischen Vinylverbindung in dem Block-Copolymer als Ganzem 10 bis 30 Gew.-% beträgt und der Gehalt an 1,2- oder 3,4-Bindungen in der konjugierten Dien-Komponente des Block-Copolymers als Ganzem 20 bis 50 Gew.-% beträgt;

e) nicht weniger als 40 Gew.-% Polymerketten mit einem trifunktionellen oder tetrafunktionellen Kuppler modifiziert sind; und

f) die Differenz zwischen dem Gehalt an der aromatischen Vinylverbindung in dem Block (A) und dem Gehalt an der aromatischen Vinylverbindung in dem Block (B) weniger als 5 Gew.-% beträgt.

2. Kautschukzusammensetzung nach Anspruch 1, worin 45 bis weniger als 75 Gew.-% der Polymerketten des Block-Copolymers modifiziert sind mit einem trifunktionellen oder tetrafunktionellen Kuppler, wobei es sich bei dem Kuppler handelt um mindestens einen Vertreter, ausgewählt aus der Gruppe, die besteht aus Siliciumtetrachlorid, Zinntetrachlorid, Germaniumtetrachlorid, Methyltrichlorsilan, Dimethyladipat, Diethyladipat, Di-n-butyladipat, Dimethylmaleat, Di-n-butylmaleat und Di-n-ocylmaleat.

3. Kautschukzusammensetzung nach Anspruch 1 oder 2, worin die aromatische Vinylverbindung Styrol ist und die konjugierte Dienverbindung 1,3-Butadien ist.

16

**4.** Kautschukzusammensetzung nach einem der Ansprüche 1 bis 3, worin die Mooney-Viskosität bei 100°C des Block-Copolymers 20 bis 150 beträgt.

**Revendications**

**1.** Une composition de caoutchouc comportant un composant de cacoutchouc renfermant au moins 20 % en poids d'un copolymère séquencé qui comporte une séquence (A) et une séquence (B), obtenu par copolymérisation d'un composé vinyl aromatique et d'un composé diène conjugué dans un solvant à base d'hydrocarbone en présence d'un initiateur à base d'organolithium, et dans lequel :

a) la séquence (A) est une séquence copolymère présentant une teneur en composé vinyl aromatique de 13 à 30 % en poids et une teneur en liaisons avec 1,2 ou 3,4 dans le composant diène conjugué de 10 à 16 % en poids ;

b) la séquence (B) est une séquence copolymère présentant une teneur en composé vinyl aromatique non inférieure à 10 % en poids et une teneur en liaisons 1,2 ou 3,4 dans le composant diène conjugué de 40 à 57 % en poids

c) la teneur en séquence (A) dans le copolymère séquencé est de 20 à 80 % en poids ;

d) la teneur en composé vinyl aromatique dans le copolymère séquencé, en totalité, est de 10 à 30 % en poids et la teneur en liaisons 1,2 ou 3,4 dans le composé diène conjugué du copolymère séquencé, en totalité, est de 20 à 50 % en poids ;

e) pas moins de 40 % en poids des chaînes polymères sont modifiées par un agent de couplage trifonctionnel ou tétrafonctionnel ; et

f) la différence entre la teneur en composé vinyl aromatique de ladite séquence (A) et la teneur en composé vinyl aromatique de ladite séquence (B) est inférieure à 5 % en poids.

**2.** La composition en caoutchouc de la revendication 1, dans laquelle 45 à moins de 75 % en poids de chaînes polymères du copolymère séquencé sont modifiés par un agent de couplage trifonctionnel ou tétrafonctionnel, l'agent de couplage étant au moins un élément choisi dans le groupe constitué par le tétrachlorure de silicium, le tétrachlorure d'étain, le tétrachlorure de germanium, le méthyltrichlorosilane, l'adipate de diméthyle, l'adipate de diéthyle, l'adipate de di-n-butyle, le maléate de diméthyle, le maléate de di-n-butyle et le maléate de di-n-octyle.

**3.** La composition de caoutchouc de la revendication 1 ou 2, dans laquelle ledit composé vinyl aromatique est du styrène et ledit composé diène conjugué est du 1,3-butadiène.

**4.** La composition de caoutchouc de l'une quelconque des revendications 1 à 3, dans laquelle la viscosité Mooney à 100°C dudit copolymère séquencé est de 20 à 150.